# EUROPÄISCHE PATENTANMELDUNG

(11) **EP 0 567 798 A1**
(43) Veröffentlichungstag der Anmeldung: **03.11.1993**
(21) Anmeldenummer: 93105479.5
(22) Anmeldetag: 02.04.1993
(51) Int. Cl.: B29D 30/70, B60C 9/26

(54) **Verfahren zum Herstellen eines Gürtelpakets für Fahrzeugluftreifen**

(30) Priorität: 30.04.1992 DE 4214198
(71) Anmelder: Continental Aktiengesellschaft, D-30165 Hannover (DE)
(72) Erfinder: Flebbe, Werner, W-3057 Neustadt a. Rbge. (DE); Frerichs, Udo, W-3017 Langenhagen (DE); Johannes, Günter, W-3008 Garbsen 8 (DE); Kachel, Uwe, W-3174 Meine (DE); Knauf, Werner, W-3050 Wunstorf 1 (DE); Peda, Karl, W-3050 Wunstorf 1 (DE); Petersmann, Norbert, Dr., W-3000 Hannover 91 (DE)

(57) **Zusammenfassung**

Die Erfindung bezieht sich auf ein Verfahren zum Herstellen eines Gürtelpakets mit einer Wickelbandage für einen Fahrzeugluftreifen. Um ein Gürtelpaket mit erheblich verfestigten Gürtelrändern zu erzeugen, wird vorgeschlagen, daß zunächst ein ringförmiger Körper (1) aus zumindest zwei Gürtellagen erzeugt wird und daß anschließend eine aus einem Materialstreifen erzeugte Wickelbandage (4) in der Weise aufgebracht wird, daß die Windungen den Gürtelring innen und außen umschlingen, wobei der Materialstreifen mit der Reifenumfangsrichtung Winkel zwischen 0° und 45° einschließt.

## Beschreibung

Die Erfindung betrifft ein Verfahren zum Herstellen eines Gürtelpakets mit einer Wickelbandage für einen Fahrzeugluftreifen.

Bei bekannten Verfahren der Reifenherstellung werden Wickelbandagen der unterschiedlichsten Art radial außen von der oberen Gürtellage aufgebracht. In der Regel decken diese bekannten Wickelbandagen insbesondere die seitlichen Ränder des Gürtels ab.

Der Erfindung liegt die Aufgabe zugrunde, ein Verfahren anzugeben, mit dem eine noch bessere Verfestigung der Gürtelränder erzielt wird, so daß auch bei hohen Fliehkräften ein Zusammenhalt des Gürtels gewährleistet ist.

Diese Aufgabe wird erfindungsgemäß dadurch gelöst, daß zunächst ein ringförmiger Körper aus zumindest zwei Gürtellagen erzeugt wird und daß anschließend eine aus einem Materialstreifen erzeugte Wickelbandage in der Weise aufgebracht wird, daß die Windungen den Gürtelring innen und außen umschlingen, wobei der Materialstreifen mit der Reifenumfangsrichtung Winkel zwischen 0° und 45° einschließt. Die Erfindung bietet den Vorteil, daß mit ihr eine erhebliche Versteifung des Gürtels in Umfangsrichtung erzielt wird. Die Streifen der Wickelbandage bilden mit den gekreuzten Cordlagen des Gürtels einen in Umfangsrichtung verlaufenden Dreiecksverband, der zu einer höheren Biegesteifigkeit des Gürtels in Umfangsrichtung führt. Somit kann ein Reifen mit einem erfindungsgemäßen Gürtelpaket höhere Umfangskräfte aufnehmen. Da bei einer sehr steilen Wickelrichtung für den Materialstreifen der Wickelbandage nur wenige Schläge zur vollständigen Abdeckung des Gürtelrings erforderlich sind, ergibt sich eine schnellere Herstellung des Gürtelpakets.

Nach einer bevorzugten Ausführungsform des Verfahrens erfolgt die Umschlingung des Gürtelrings mittels des Materialstreifens der Wickelbandage in der Weise, daß der Materialstreifen mit der Reifenumfangsrichtung Winkel zwischen 5 und 15°, bevorzugt zwischen 5 und 10° einschließt. Es wird ein Wickelverfahren bevorzugt, bei dem benachbarte Materialstreifen dicht an dicht gewickelt werden, doch kann bei Bedarf auch mit Überlappungen gearbeitet werden. Die Erzeugung der Wickelbandage auf dem Gürtelring läßt sich auf unterschiedliche Weise bewerkstelligen. So kann die Winkelstellung zur Reifenumfangsrichtung derart gewählt werden, daß beim Wickeln des Materialstreifens über eine Umfangslänge des Gürtelrings genau eine einzige Umschlingung des Gürtelrings entsteht. Danach legt sich der Materialstreifen genau neben die erste Windung und es wird bei einer weiteren Umfangslänge wiederum eine einzelne Umschlingung des Gürtelrings erzeugt. Dieses Verfahren wird so lange fortgesetzt, bis der Gürtelring innen und außen vollständig von der Wickelbandage bedeckt wird. Ein derart hergestelltes Gürtelpaket wird anschließend nach bekannten Verfahren mit einem Karkaßkörper verbunden und zur Vervollständigung eines Reifenrohlings mit einem Laufstreifen versehen.

Das Aufbringen der Wickelbandage auf den Gürtelring kann auch in der Weise erfolgen, daß beim Wickeln des Materialstreifens über eine Umfangslänge des Gürtelrings mehrere Umschlingungen des Gürtelrings entstehen. Hierbei entstehen zwischen dem aufgelegten Materialstreifen Lücken gleichen Abstands, die beim weiteren Wickeln des Materialstreifens gleichmäßig aufgefüllt werden. Um eine noch größere Steilstellung des Materialstreifens beim Wickeln zu erzielen, kann aber auch der Materialstreifen in der Weise gewickelt werden, daß über eine Umfangslänge des Gürtelrings weniger als eine Umschlingung des Gürtelrings entsteht oder mit anderen Worten, daß man z.B. über eine Länge von zwei Umfangslängen wickeln muß, um eine Umschlingung des Gürtelrings zu erzeugen. Als Material für die Wickelbandage kommt insbesondere Nyloncord in Frage. Dabei kann die Fadendicke zwischen 0,4 und 1 mm liegen. Wenn auch grundsätzlich mit einem Einzelfaden gewickelt werden kann, ist es aus wirtschaftlichen Gründen zweckmäßig, einen Materialstreifen aus gummiertem Nyloncord zu verwenden. Die Streifenbreite kann zwischen 5 und 20 mm liegen und die Fadendichte sollte bei ca. zehn Fäden pro Zentimeter Streifenbreite liegen.

Nachfolgend wird ein Ausführungsbeispiel der Erfindung anhand einer schematischen Zeichnung erläutert. Es zeigt
- Fig. 1: einen Gürtelring mit einer teilweise aufgelegten Bandage in einer perspektivischen Darstellung,
- Fig. 2: ein Gürtelpaket einer halben Umfangslänge in einer Draufsicht,
- Fig. 3: eine Vorrichtung zum Auflegen eines Materialstreifens auf einen Gürtelring.

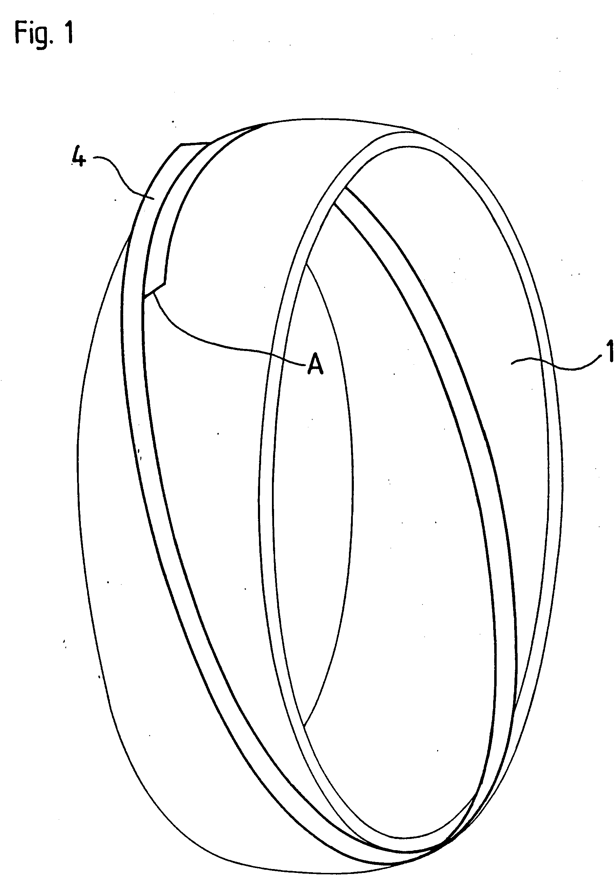

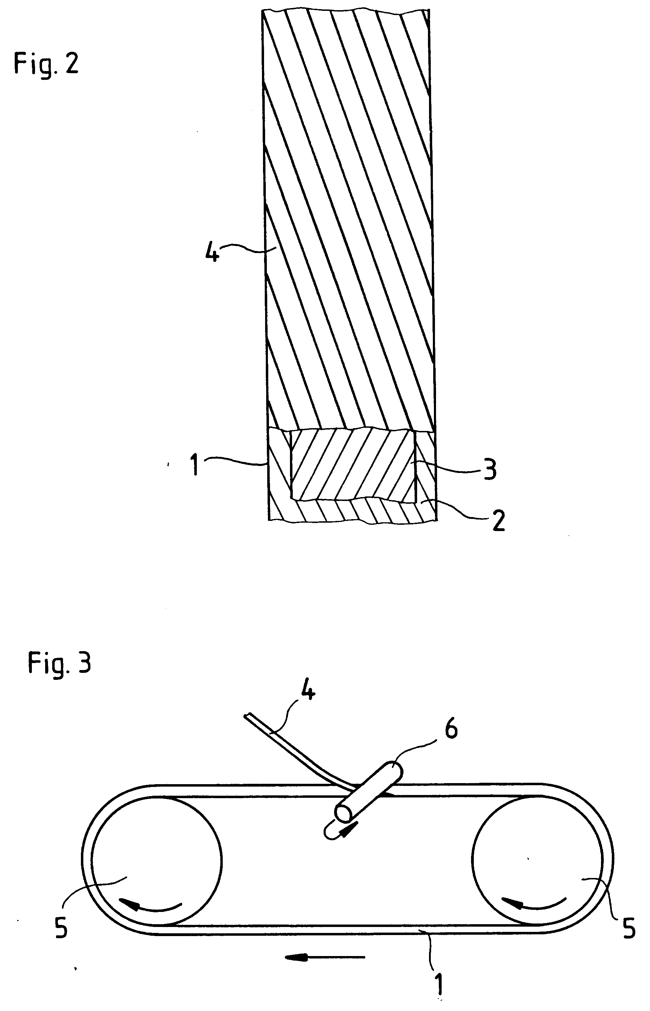

Der in Fig. 1 und Fig. 2 dargestellte Gürtelring 1 besteht aus zumindest zwei Gürtellagen, die zunächst auf eine Gürteltrommel aufgebracht werden. Die Gürtellagen 2, 3 des Gürtelrings 1 bestehen üblicherweise aus Stahlcord mit schräg zur Reifenumfangsrichtung verlaufenden Fäden, wobei die beiden Lagen 2, 3 im Kreuzverband angeordnet sind. Die Fäden der Lagen 2, 3 bilden mit der Reifenumfangsrichtung Winkel zwischen 15 und 30°. Nach der Vervollständigung des Gürtelrings 1 wird dieser von der Gürteltrommel abgenommen, damit er mit einer Wickelbandage umschleudert werden kann. In Fig. 1 ist das Aufbringen des Materialstreifens 4 der Wickelbandage schematisch dargestellt. Das Auflegen beginnt im Punkt A. Der Materialstreifen 4 wird in der Weise schräg aufgelegt, daß er nach dem Wickeln über eine halbe Umfangslänge des Gürtelrings 1 eine halbe Umschlingung des Gürtelrings 1 erreicht. Beim weiteren Wickeln geht der Materialstreifen 4 von der Innenseite des Gürtelrings wieder auf die Außenseite über und landet nach genau einer Umfangslänge des Gürtelrings neben dem Anfang A. Dabei hat er eine Umschlingung des Gürtelrings 1 ausgeführt. Der Streifen 4 wird nunmehr neben der ersten Windung aufgelegt, so daß er bei einer weiteren Umfangslänge eine zweite Umschlingung des Gürtelrings 1 ausgeführt hat. Dieses Verfahren wird so lange fortgesetzt, bis der Gürtelring 1 außen und inne vollständig von dem Materialstreifen 4 bedeckt ist.

Zum Auflegen des Materialstreifens 4 der Wickelbandage auf den Gürtelring 1 kann letzterer bevorzugt in eine Vorrichtung mit zwei sich drehenden Trommeln 5 eingespannt werden. Zwischen den beiden Trommeln 5 befindet sich eine räumlich verschwenkbare Rolle 6, die dazu dient, den Materialstreifen 4 auf den äußeren und inneren Teilen des Gürtelrings 1 aufzulegen. Das Auflegen erfolgt in der Weise wie es in Fig. 1 beschrieben worden ist. Fig. 2 stellt ein Gürtelpaket dar, das vollständig von einer Wickelbandage umschlungen wird. Dabei ist die Wickelbandage über eine halbe Umfangslänge des Gürtelrings 1 dargestellt. Weiterhin ist erkennbar, daß die Fäden der Wickelbandage mit denen der benachbarten Gürtellage 3 im Kreuzverband angeordnet sind.

## Patentansprüche

1. Verfahren zum Herstellen eines Gürtelpakets mit einer Wickelbandage für einen Fahrzeugluftreifen,
**dadurch gekennzeichnet,**
daß zunächst ein ringförmiger Körper aus zumindest zwei Gürtellagen erzeugt wird und daß anschließend eine aus einem Materialstreifen erzeugte Wickelbandage in der Weise aufgebracht wird, daß die Windungen den Gürtelring innen und außen umschlingen, wobei der Materialstreifen mit der Reifenumfangsrichtung Winkel zwischen 0° und 45° einschließt.

2. Verfahren nach Anspruch 1, dadurch gekennzeichnet, daß die Umschlingung des Gürtelrings mittels des Materialstreifens in der Weise erfolgt, daß der Materialstreifen mit der Reifenumfangsrichtung Winkel zwischen 5 und 15° einschließt.

3. Verfahren nach Anspruch 1, dadurch gekennzeichnet, daß benachbarte Windungen des Streifens dicht an dicht gewickelt werden.

4. Verfahren nach Anspruch 1, dadurch gekennzeichnet, daß beim Wickeln des Materialstreifens über eine Umfangslänge des Gürtelrings eine einzelne Umschlingung des Gürtelrings entsteht.

5. Verfahren nach Anspruch 1, dadurch gekennzeichnet, daß beim Wickeln des Materialstreifens über eine Umfangslänge des Gürtelrings mehrere Umschlingungen des Gürtelrings entstehen.

6. Verfahren nach Anspruch 1, dadurch gekennzeichnet, daß beim Wickeln des Materialstreifens über eine Umfangslänge des Gürtelrings weniger als eine Umschlingung des Gürtelrings entsteht.

7. Verfahren nach Anspruch 1, dadurch gekennzeichnet, daß als Materialstreifen Nyloncord verwendet wird.

8. Verfahren nach Anspruch 1, dadurch gekennzeichnet, daß als Materialstreifen ein Einzelfaden aus Nylon verwendet wird.

9. Verfahren nach Anspruch 1 oder 7, dadurch gekennzeichnet, daß als Materialstreifen ein Nyloncord der Breite 5 bis 20 mm verwendet wird.
